# EUROPÄISCHE PATENTSCHRIFT

(11) **EP 0 786 846 B1**
(45) Veröffentlichungstag und Bekanntmachung des Hinweises auf die Patenterteilung: **15.03.2000**
(21) Anmeldenummer: 97100434.6
(22) Anmeldetag: 14.01.1997
(51) Int. Cl.: H02G 9/10, E02D 29/02

(54) **Elektroinstallationskanal**
Electrical installation channel
Canalisation pour installation électrique

(30) Priorität: 27.01.1996 DE 29601417 U
(43) Veröffentlichungstag der Anmeldung: 30.07.1997
(73) Patentinhaber: Albert Ackermann GmbH & Co. KG, 51643 Gummersbach (DE)
(72) Erfinder: Fastenroth,Kurt Helmut, 51647 Gummersbach (DE)
(74) Vertreter: Wilhelm & Dauster Patentanwälte European Patent Attorneys

(56) Entgegenhaltungen:
- DE-U- 29 506 860
- FR-A- 2 663 058
- US-A- 4 407 611
- US-A- 5 259 704

## Beschreibung

Die Erfindung betrifft einen Elektroinstallationskanal zur fußbodenebenen Anordnung in Estrich- oder Betonböden, mit einem zwischen Seitenprofilen einsetzbaren abnehmbaren Deckel und mit in beiden Seitenprofilen mit einem abgekanteten Rand einhängbaren Estrichankern.

Elektroinstallationskanäle dieser Art sind bekannt (Offene Estrichbündige Installationskanäle OKU der Anmelderin). Für zu öffnende fußbodenebene Elektroinstallationskanäle, die später auf drei Seiten von Estrich oder Beton umgeben sind, ist es wichtig, daß ihre senkrechten Seiten mit dem den Kanal umgebenden Material fest verbunden sind, um sicherzustellen, daß bei entferntem Deckel und bei Belastung des Kanales ein Verbiegen dieser Seitenwände zum Kanalinnenraum vermieden wird. Um dies zu erreichen, werden neben einer verbindungsgünstigen Außenprofilierung der senkrechten Kanalwände zusätzlich auch Estrichanker verwendet, die seitlich von den Profilen abragen, dadurch vollständig im Estrich liegen und einen innigen Verbund mit dem Estrich oder dem Beton eingehen und die gewünschte Sicherung der Kanalwände übernehmen.

Weil Estrichanker, die im Werk eingesetzt werden, sowohl das Verpackungsvolumen der Elektroinstallationskanäle erhöhen, als auch eine Verletzungsgefahr darstellen können, hat man vorgesehen, daß die Estrichanker über bestimmte Verbindungselemente mit den Außenwänden der Kanäle verbunden werden können, um sie nach der Montage der Kanäle durch die Monteure ansetzen zu können. Die bisher zum Ansetzen der Estrichanker notwendigen Maßnahmen sind aber relativ aufwendig.

Der vorliegenden Erfindung liegt daher die Aufgabe zugrunde, einen Elektroinstallationskanal der eingangs genannten Art so auszubilden, daß die Estrichanker als letzte Maßnahme nach der erfolgten Montage des Kanals auf einfache Weise am Einsatzort ohne Verwendung von Werkzeugen eingesetzt werden können.

Zur Lösung dieser Aufgabe wird bei einem Elektroinstallationskanal der eingangs genannten Art vorgesehen, daß der abgekantete Rand des Estrichankers in seiner Höhe etwa der Höhe der Innennut der nach außen offenen C-förmigen Seitenprofile entspricht und im Bereich der Abkantung ballige Auswölbungen vorgesehen sind, die beim Anliegen des Randes an der Innenseite des Seitenprofils die untere Außenkante des Seitenprofiles einrastend hintergreifen. Durch diese Ausgestaltung genügt es in einfacher Weise, den abgekanteten Rand des Estrichankers mit seinem freien Ende in das offene Seitenprofil einzuführen, diese Kante als eine Art Schwenkscharnier zu verwenden und den Estrichanker in einer Richtung so weit zu verschwenken, bis die Auswölbungen merkbar über die zugeordnete Kante des Seitenprofiles schnappen. Der Estrichanker ist dann fertig eingesetzt. Nach dem Vergießen des Kanales in Estrich oder Beton übernimmt der so eingesetzte Estrichanker in einwandfreier Weise seine Aufgabe, weil er sich nach dem Vergießen nicht mehr aus seiner eingestellten Schwenklage, in der er fest verrastet und im Umgebungsmaterial eingebettet ist, zurückschwenken läßt.

In Weiterbildung der Erfindung kann der Estrichanker aus einem gekanteten Flachblechstreifen bestehen, der an der Abkantung des Randes zwei domartige, vom freien Ende des Randes weggerichtete Auswölbungen aufweist, deren Mittelpunkte neben der Faltkante des Randes liegen.

In Weiterbildung der Erfindung können die Abmessungen der Auswölbungen so auf die Innennut der Seitenprofile abgestimmt sein, daß sich bei eingerastetem Estrichanker ein Teil der Auswölbung am Außenrand des Seitenprofiles abstützt. Diese Ausgestaltung sichert das Einschnappen des Estrichankers beim Einhängen und dessen Lage noch vor dem Einbringen des Umgebungsmateriales.

Die Erfindung ist in der Zeichnung anhand eines Ausführungsbeispieles dargestellt und wird im folgenden erläutert. Es zeigen:
- Fig. 1: die Schnittdarstellung der Hälfte eines erfindungsgemäßen ausgestalteten Elektroinstallationskanales mit seitlich fest eingehängtem Estrichanker,
- Fig. 2: die vergrößerte Darstellung des in Fig. 1 gezeigten Seitenprofiles des Elektroinstallationskanales mit einer Darstellung der Montagephasen des Estrichankers,
- Fig. 3: die Seitenansicht des in den Fig. 1 und 2 mit dem Elektroinstallationskanal verbindbaren Estrichankers, und
- Fig. 4: die Draufsicht auf den Estrichanker der Fig. 3.

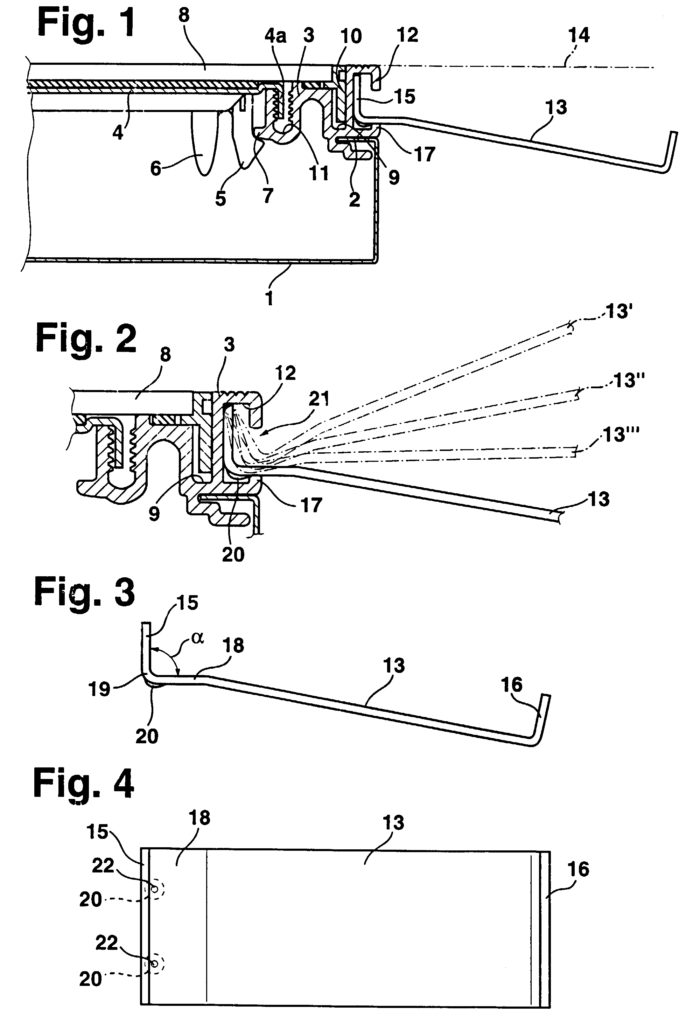

In der Fig. 1 ist die rechte Hälfte eines Elektroinstallationskanales gezeigt, der aus einem U-förmigen, nach oben offenen Blechkanal (1), aus an den Rändern (2) des Blechkanales (1) angesetzten Seitenprofilen (3) und aus einem die offene Oberseite des Kanales abschließenden Deckel (8) aufgebaut ist. Auf einem inneren Deckel (4), der über Rasthaken (5), die als besondere Abstützelemente ausgebildet, mit Abstützapfen (6) versehen und an den Deckel (4) angesetzt sind, an einer Kante (7) des Seitenprofiles (3) verrastet ist, ist oben der bodenbündig abschließende Deckel (8) aufgesetzt, der von einer in eine Nut (9) des Seitenprofiles (3) eingreifenden Leiste (10) seitlich abgeschlossen ist. Das Seitenprofil (3) besitzt außerdem eine Eingreifnut (11) für den Rand (4a) des Deckels (4), die so ausgebildet ist, daß auch Schrauben einsetzbar sind. Das Seitenprofil (3) ist ferner mit einer C-förmig ausgebildeten und nach außen offenen Nut (12) versehen, in die (in nicht gezeigter Weise) Nivellierstücke zur Höhenregulierung des Kanales sowie Estrichanker (13) von außen einsetzbar sind, von denen einer in der Fig. 1 in seiner Endlage gezeigt ist. Der Elektroinstallationskanal der Fig. 1 wird, wie durch eine gestrichelte Linie (14) angedeutet ist, bis zum Niveau dieser Linie (14) nach seiner auf einem Rohboden erfolgten Montage mit Estrich - oder auch mit Beton - vercossen, so daß der Kanal (1), das Seitenprofil (3) und der Estrichanker (13) im Endzustand vollkommen von dem Vergußmaterial, insbesondere Estrich, umgeben sind.

Aus den Fig. 2 bis 4 geht hervor, daß der Estrichanker (13) als ein gekanteter Blechstreifen ausgebildet ist, dessen Enden einen ersten abgekanteten Rand (15) und, an der späteren Außenseite, ebenfalls einen abgekanteten Rand (16) aufweisen.

Der Rand (15) ist dabei so abgekantet und bemessen, daß er dem Innenraum der Nut (12) von deren Oberseite bis etwa zur Oberkante der eine Öffnung (21) der Nut nach außen begrenzenden Außenkante (17) entspricht, und er geht in einen angrenzenden Bereich (18) unter einem Winkel (α) von etwa 90° über. Von dem Bereich (18) aus ist der weitere Estrichanker leicht nach unten abgeknickt, wie Fig. 3 zeigt.

Etwa im Bereich der Abkantung (19), zwischen dem Rand (15) und dem Bereich (18), sind an dem Estrichanker (13) Auswölbungen (20) vorgesehen, die in der Form von zwei domartigen und vom freien Ende des Randes (15) wegweisenden Auswölbungen (20) ausgebildet sind, deren Abmessungen (siehe Fig. 2) so gewählt sind, daß zumindest ein Teil der warzenartigen Auswölbungen (20) in der Montagelage des Estrichankers (13) (Fig. 1) sich an der Außenkante (17) der Nut (12) so abstützt, daß die Einbaulage des Estrichankers (13) gesichert ist. Diese beiden domartigen Auswölbungen (20) besitzen dabei Mittelpunkte (22), die etwas neben der eigentlichen Faltkante (19) des Profiles des Estrichankers (13) liegen. Diese Ausgestaltung ermöglicht den festen Sitz des Estrichankers (13) in seiner Endlage. Mindestens die domartigen Auswölbungen (20) müssen, um den Montagevorgang durchführen zu können, etwas elastisch ausgebildet sein, weil sie sich einrastend über die Kante (17) hinwegbewegen müssen. Bei einer Ausbildung des Estrichankers (13) aus üblichem Stahlblech ergibt sich eine solche Elastizität von selbst. Vorgesehen werden kann aber auch, daß die domartigen Auswölbungen (20) im Bereich ihrer Mittelpunkte (22) mit Öffnungen versehen sind, die auch für den Herstellungsprozeß, z.B. durch Ausstanzen und Ausprägen vorteilhaft sein können.

Die Fig. 2 zeigt im einzelnen die einfache Art und Weise, in der der Estrichanker nach den Fig. 3 und 4 in das Seitenprofil (3) des Elektroinstallationskanales nach den Fig. 1 und 2 eingesetzt werden kann.

Fig. 2 zeigt, daß zu diesem Zweck der Estrichanker in der Stellung (13') zunächst mit seinem freien Rand (15) in die freie Öffnung (21) zwischen der Außenkante (17) und der ihr gegenüberliegenden Oberkante der Öffnung (21) eingeführt wird, so, daß seine Außenkante zur Berührung mit der oberen Innenfläche der Nut (12) kommt. Der Estrichanker (13) wird dann im Uhrzeigersinn mehr und mehr in die Stellungen (13') und (13''') verschwenkt, wobei die Oberkante des Randes (15) als eine Art Scharnier wirkt und an der Oberseite der Nut (12) angelegt bleibt, während der abgekantete Bereich (19) und die domartigen Auswölbungen (20) mit der Unterkante (17) der Nut (12) in Berührung bleiben. Erreicht bei dieser Schwenkbewegung der Estrichanker (13) seine Endstellung (13), dann sind die domartigen Auswölbungen (20) über die Oberkante (17) hinweggeschnappt und liegen nur noch mit einem Teil ihres Umfangs innen an dieser Oberkante (17) an und sichern so, daß der Rand (15) in Anlage mit der Innenwand der Nut (12) bleibt, wie das in Fig. 1 gezeigt ist.

Es ist ohne weiteres zu erkennen, daß dieser Montagevorgang für den Estrichanker äußerst einfach ist. Der Estrichanker selbst läßt sich auch einfach herstellen, so daß durch die Erfindung eine wirtschaftliche Ausgestaltung für einen Estrichanker eines Elektroinstallationskanales gefunden ist. Wie eingangs bereits angedeutet, wird der gemäß Fig. 1 eingehängte Estrichanker ebenso wie der gesamte Elektroinstallationskanal anschließend bis zum Niveau (14) mit Estrich o.dgl. vergossen und behält dabei seine Montagelage, in der er zur Versteifung der Seitenwände führt.

## Patentansprüche

1. Elektroinstallationskanal zur fußbodenebenen Anordnung in Estrich- oder Betonböden, mit einem zwischen Seitenprofilen (3) einsetzbaren abnehmbaren Deckel (8) und mit in beiden Seitenprofilen (3) mit einem abgekanteten Rand einhängbaren Estrichankern (13), dadurch gekennzeichnet, daß der Rand (15) in seiner Höhe etwa der Höhe der Innennut (12) der C-förmigen Außenteile der Seitenprofile (3) entspricht und im Bereich der Abkantung (19) ballige Auswölbungen (20) vorgesehen sind, die beim Anliegen des Randes (15) an der Innenseite der Nut (12) des Seitenprofiles (3) die untere Außenkante (17) der Nut (12) einrastend hintergreifen.

2. Elektroinstallationskanal nach Anspruch 1, dadurch gekennzeichnet, daß der Estrichanker aus einem gekanteten Flachblechstreifen besteht, der an der Abkantung (19) des Randes (15) zwei domartige, vom freien Ende des Randes (15) weggerichtete Auswölbungen (20) aufweist, deren Mittelpunkte neben der Faltkante (19) des Randes (15) liegen.

3. Elektroinstallationskanal nach den Ansprüchen 1 und 2, dadurch gekennzeichnet, daß die Abmessungen der Auswölbungen (20) so auf die Innennut (12) der Seitenprofile (3) abgestimmt sind, daß sich bei eingerastetem Estrichanker (13) ein Teil der Auswölbung (20) am Außenrand (17) des Seitenprofiles abstützt.

## Claims

1. Electrical installation channel for arrangement at floor level in plaster or concrete flooring, having a removable cover (8), which can be inserted between lateral profiles (3), and having plaster anchors (13) which can be suspended in both lateral profiles (3) with a bent border, characterised in that the border (15) corresponds in its height approximately to the height of the internal slot (12) of the C-shaped outer portions of the lateral profiles (3) and, in the region of the bend (19), spherical convex portions (20) are provided which, when the border (15) is positioned against the inner side of the slot (12) of the lateral profile (3), grip behind the lower outer border (17) of the slot (12) in an engaging manner.

2. Electrical installation channel according to claim 1, characterised in that the plaster anchor comprises an edged flat metal strip which has, at the bend (19) of the border (15), two dome-like convex portions (20) which are directed away from the free end of the border (15) and whose centre points are adjacent to the bent edge (19) of the border (15).

3. Electrical installation channel according to claims 1 and 2, characterised in that the dimensions of the convex portions (20) are co-ordinated with the inner slot (12) of the lateral profiles (3) such that, when the plaster anchor (13) is engaged, part of the convex portion (20) rests against the outer border (17) of the lateral profile.

## Revendications

1. Gaine technique pour installations électriques, pour mise en place en affleurement avec des planchers de plâtre ou de béton, comportant un couvercle (8), amovible, pouvant être inséré entre deux profilés latéraux (3), ainsi que des tiges d'ancrage (13) pour plâtre, pouvant être suspendues dans les deux profilés latéraux (3) avec un bord biseauté, caractérisée en ce que le bord (15) a une hauteur qui correspond approximativement à la hauteur de la gorge intérieure (12) des pièces extérieures en C des profilés latéraux (3), et que des saillies concaves (20) sont prévues dans la zone du biseautage (19), qui lors de la mise en place du bord (15) contre le côté intérieur de la gorge (12) du profilé latéral (3) passent en encliquettement en arrière de l'arête extérieure (17) de la gorge (12).

2. Gaine technique pour installations électriques selon la revendication 1, caractérisée en ce que la tige d'ancrage pour plâtre est constituée d'une bande de tôle plate pliée, qui au niveau du biseautage (19) du bord (15) comporte deux saillies (20) en forme de dôme, opposées à l'extrémité libre du bord (15) et dont les axes se trouvent à côté de l'arête de pliage (19) du bord (15).

3. Gaine technique pour installations électriques selon les revendications 1 et 2, caractérisée en ce que les dimensions des saillies (20) sont adaptées à la gorge intérieure (12) des profilés latéraux (3) de telle sorte que, quand la tige d'ancrage (13) est encliquetée, une partie de la saillie (20) s'appuie contre le bord extérieur (17) du profilé latéral.
